# EUROPEAN PATENT APPLICATION

(11) **EP 2 543 745 A1**
(43) Date of publication of application: **09.01.2013**
(21) Application number: 11172794.7
(22) Date of filing: 06.07.2011
(51) Int. Cl.: C22B 3/02, C22B 3/04, C22B 3/20, B01D 21/00, C02F 1/52, B01D 21/30

(54) **Method for controlling solids/liquid decant unit operations and systems**

(71) Applicant: Cognis IP Management GmbH, 40589 Düsseldorf (DE)
(72) Inventor: Megaw, Darren, 2194 Randparkridge (ZA)
(74) Representative: Fabry, Bernd

(57) **Abstract**

Suggested is a method for dewatering a slurry from the leaching of a valuable ore with an aqueous solution of an effective leaching agent via a solids/liquid decantation system, providing an overflow depleted from solids and an underflow rich in solids that is washed counter-current through a number of solids/liquid decantation stages, the improvement implementing into the process line
(a) a first Controller (C1) for monitoring and steering the leach product thickener; and
(b) a second Controller (C2) for monitoring and steering the counter-current decanter

## Description

### Field of invention

The present invention belongs to the area of hydrometallurgy, and in particular to the leaching of ores and refers to an improved control basis for reducing un-optimized operating conditions in liquid/solid decant unit operations and systems.

### State of the art

The proper separation of liquids and solids belong to the key unit operations in hydrometallurgy in general and in leaching of crude ores with an aqueous solution of an effective leaching agent in particular. From the state of the art various solids/liquid separation processes are well known, as for example dewatering thickeners, counter-current decanters (CCD) or pinned bed clarifiers (PBC).

For example US 3,685,654 (Gordon Sherrit Mines) discloses a thickener for the concentration of a solids-liquid suspension includes a vessel or tank into which such a suspension is continuously introduced and a rotating rake assembly for exerting mechanical pressure on the solids-sediment layer settling in the bottom of the vessel. US 5,601,704 (Graver) refers to an automatic feedback control system for a water treatment apparatus, such as a recirculating solids contact clarifier, that maintains steady-state operation of the clarifier by accurately measuring the concentration of suspended solids at designated portions of the clarifier and automatically adjusting clarifier variables to maintain optimum conditions despite changes in the inlet flow rate, composition or temperature.

All these methods are combining mixing, settling and decanting steps with or without the assistance of settling aids like for example flocculation or coagulation agents. Typically, the processes are supported by any source of agitation or movement of the phases. However, existing processes still show serious drawbacks which can have a negative impact on the efficacy of the solids/liquid separation and therefore on the yield and conversion of the overall leaching process:
(i) ***Dosing of the settling aids:***
   Fluctuating solids composition in the feed slurry or fluctuations in the feed slurry volumetric flow often cause fluctuations in the overall solids/liquid separation process. Manual dosage rate estimates and adjustments and erratic fluctuations in dosing controller input reference parameters can cause erratic settling aid dosing pump output having a negative impact on the settling aid dosage mass flow. As a consequence the composition of the products leaving the solids/liquid separation is constantly changing and causing problems in the following steps of the recovery process.
(ii) ***Underflow discharge slurry densities:***
   Inaccurate or inconsistent settling aid dosage mass flow leads to fluctuating underflow discharge slurry densities. Again, inconsistency of the compositions is a major problem for processing the liquids in the following operations.
(iii) ***Inefficient liberation of dissolved soluble metal species***
   Low system underflow slurry densities, higher entrained solution content per underflow slurry unit volume, and inefficient feed solids dispersion within contact wash aqueous solution prior to solid settling are responsible for an unsatisfying liberation of dissolved soluble metal species from the slurry being treated-, into the separated aqueous phase of the liquid/solid unit operation.
(iv) Inefficient dissolution of un-dissolved soluble metal species
   Incomplete conversion of the lixiviant-soluble available contained metal in leach feed and product material, often caused by unbalanced metal leaching system parameters, lead to unsatisfactory dissolution of soluble metal species, from the solids of the slurry being treated, into the aqueous phase of the liquid/solid unit operation.

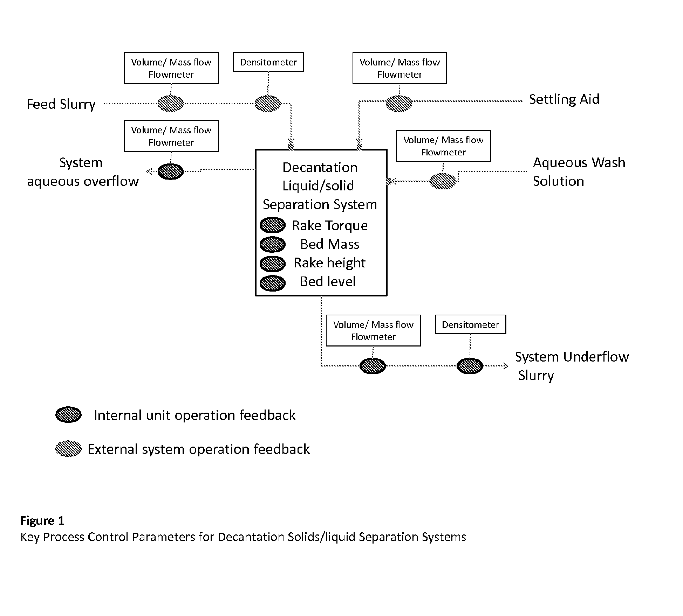

**Figure 1** depicts a simplified flow sheet of mechanized solids/liquid separation decantation system using a settling aid to facilitate solids/liquid separation of feed slurry as it is known from the state of the art. The system receives volume and mass information on feed slurry, settling aid and aqueous wash solution and controls the system aqueous overflow and the underflow slurry based on rake torque, rake height, bed mass and bed level. Typical indicating transmitters that can be used by operations as controller-systems and circuit inputs to affect favourable control are shown on the various feed and discharge systems. Indicating transmitters associated directly with the safe mechanical operation of the solid liquid separation decantation unit operation are also shown.

The following Table 1 lists the various unit operation controllers, systems and circuits depicted in Figure 1, and typical application of these components in operating philosophies employed by hydrometallurgical processing plants for solids/liquid separation decantation unit operations and circuits.

**Table 1**

| Operation Controllers | | | | |
|---|---|---|---|---|
| **System** | **Controller component** | **Typical Indicating Transmitter Feedback** | **Typical operating philosophies** | **Description of data manipulation** |
| **Feed Slurry** | Volume/Mass flow meter | Field and control room PLC (Process Logic Controller) feedback from instrument | Manual control of feed slurry flow | Operator-adjusted slurry feed pump or control valve output to required slurry mass/ volume throughput from a PLC |
| | | | Manual control of settling aid flow | Operator-adjusted settling aid pump / control valve output to accommodate adjustment on feed slurry volume/ mass flow |
| **Feed slurry** (Cont.) | Densitometer | Field and control room PLC feed-back from instrument | Manual control of settling aid flow | Operator-adjusted settling aid pump / control valve output to accommodate increase or decrease in feed slurry density and flow (mass flow) |
| **Settling Aid** | Volume/ Mass flow meter | Field and control room PLC feed-back from instrument | Manual interface of settling aid flow control adjustment | Operator-adjusted settling aid pump / control valve output to accommodate increase or decrease in feed slurry density |
| **Aqueous Over-flow /Wash solution for upstream liquid/solid separation decanter** | Volume/ Mass flow meter | Field and control room PLC feed-back from instrument | Manual interface of overflow aqueous flow control adjustment | Operator-adjusted overflow aqueous pump / control valve output to balance wash throughput through entire solids/liquid separation circuit. This is done primarily to maintain process water balance. |
| **System Under-flow Slurry** | Volume/ Mass flow meter | Field and control room PLC feed-back from instrument | Manual interface of underflow slurry flow control adjustment | Operator-adjust underflow slurry pump output to affect underflow flow control. |
| | Densitometer | Field and control room PLC feed-back from instrument | Manual interface of underflow slurry flow control adjustment | Operator-adjust underflow slurry pump output to affect underflow density control. |
| **Unit Operation: Rake Torque** | Rake torque indicator | Field and control room PLC feed-back from instrument | Manual interface of underflow slurry flow control adjustment | Operator-adjust underflow slurry pump output to affect a reduction in rake torque. |
| | Rake torque indicator | Field and control room PLC feed-back from instrument | Manual interface of settling aid dosing control adjustment | Operator-adjust settling aid dosing pump output to affect a reduction in rake torque. |
| | Rake torque indicator | Field, control room PLC and unit operation local field PLC feedback from instrument | Automated rake raise-lower adjustment | Unit operation local field PLC initiates rake-raise-lower control |
| **Unit Operation: Bed Mass** | Bed Mass Pressure Transmitter | Field and PLC feedback from instrument | Manual interface of underflow slurry flow control adjustment | Operator-adjusted under-flow slurry pump output to affect an increase or decrease in unit operation bed mass. |
| **Unit operation: Bed Level** | Bed Level Transmitter | | Manual interface of underflow slurry flow control adjustment | Operator adjusted settling aid dosing pump output to affect an increase or decrease in bed level. |

The level of operator intervention for the above control scenario is high. This often results in metal extraction operations that utilize liquid/solid decant unit operations or systems, running at un-optimized states for high percentages of total operational run time. In addition to this, the potential for the total liquid/solid decant system to reach unsustainable operating conditions, where either a unit operation or a total system needs to be taken off the line, is high.

Therefore, an effective control of these criteria is key for running an efficient lixiviation process. In particular the problem underlying the present invention has been to ensure a target liquid-solid separation process underflow slurry composition and an overflow solution composition that are achieved consistently with associated maximum mass transfer of the target phases, while not impacting negatively on any of the associated liquid/solid separation process unit operations, i. e. maximizing plant availability by reducing unplanned downtime due to mechanical failure of equipment. More particularly, the present invention aims to provide a reliable control basis that can significantly reduce un-optimised operating conditions in liquid/solid decant unit operations and systems.

### Description of the invention

The present invention refers to a method for dewatering a slurry from the leaching of a valuable ore with an aqueous solution of an effective leaching agent via a solids/liquid decantation system, providing an overflow depleted from solids and an underflow rich in solids that is washed counter-current through a number of solids/liquid decantation stages, the improvement implementing into the process line
(a) a first Controller (C1) for monitoring and steering the leach product thickener; and
(b) a second Controller (C2) for monitoring and steering the counter-current decanter.

The method according to the present invention provides a reliable control basis that can significantly reduce un-optimised operating conditions in liquid/solid decant unit operations and systems.

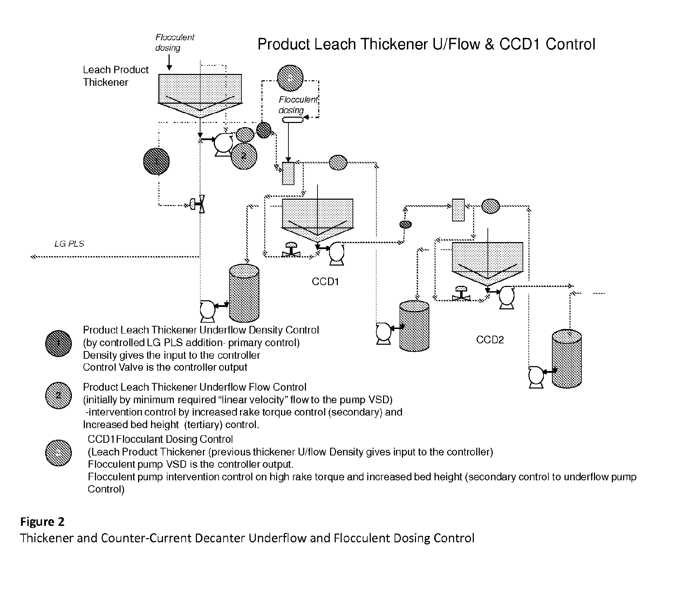

The invention is illustrated by **Figure 2** showing a simplified diagram highlighting the various controllers around the proposed solids/liquid separator decanter control basis. The identified unit operations being discussed are sequentially for the leach product thickener, and then for the Counter-Current Decanter 1 (CCD1), with system interaction control from the leach circuit and Counter-Current Decanter 2 (CCD2).

### Nomenclature

In order to avoid ambiguities the following control system nomenclature is defined and applicable to terminology associated with this patent application:
(a) ***Indicating transmitter:*** Any instrument or device that gives feedback either as a local display in the field or to a central Process Logic Controller (PLC) (e.g. level transmitter, flow meter, densitometer, pH meter, pressure transmitter, temperature transmitter, turbidity meter).
(b) ***Controller**:* Any device that receives an input signal either directly or indirectly from an indicating transmitter or PLC and responds accordingly by either increasing or decreasing the output of that device (e.g. pump variable speed controllers and drives, proportional output control valves).
(c) ***Unit Operation**:* An installed item of equipment with associated drives and discharge system.
(d) ***Unit Operation Control (UOC):*** Control integrally associated with any one unit operation. For example, the following list of indicating transmitters and controllers are associated with an agitated tank at unit operation level:
   - Tank Level Transmitter
   - Tank Temperature transmitter
   - Tank Agitator Ammeter (Current transmitter)
   - Tank Discharge Slurry Flow Transmitter
   - Tank Discharge Slurry Densitometer
   - Tank Discharge Slurry pump Variable Speed Drive
(e) ***System**:* A group of unit operations that are integrally associated (both from a process and control perspective).
(f) ***System Control**:* Control integrally associated with a group of associated unit operations. For example, the following list of indicating transmitters will affect a control response from the tank unit operation:
   Tank Feed Slurry Flow Transmitter (better referred to as Adjacent System Tank Discharge Slurry Flow Transmitter)
      - Adjacent Unit Operation Tank Feed Slurry Pump Variable Speed Drive
      - Adjacent Unit Operation Tank Discharge Slurry Flow Transmitter
   All the above indicating transmitters and controllers are either feedback indicators (supply information about the status of the process unit operation at any given time) or are controllers responding in a certain way to the feedback status of the process unit operation as provided by the feedback indicators.
(g) ***Circuit**:* A collection of systems that respond to feedback indicators from associated systems. For example, the indicating level transmitter of a tank (unit operation) could be linked to an upstream feed tank discharge pump variable speed drive, causing the drive either to speed up or slow down, depending on a corresponding decrease or increase in tank (unit operation) level. Collectively the control of the two unit operations are referencing feedback indicators and implementing control outside the individual systems control. Figure 1 shows typical indicating transmitters and controllers associated with a mechanical liquid/solid decantation unit operation or system.
(h) ***Primary control**:* This is the preferred or default control for any target controllable process parameter. Primary control is generally applicable when the unit operation, system or circuit control is within defined process limit parameters. (i.e. at a state of acceptable equilibrium). Rate of change (step changes) in control parameters for primary controllers is generally gentle (small).
(i) ***Intervention control**:* These are controllers that are only activated when the unit operation, system or circuit parameters move outside the defined process limit parameters. Intervention controllers rate of change steps are large and are designed to bring the unit operation, system or circuit control back within defined process limit parameters with the minimum delay.

### Leach product thickener control

In a preferred embodiment the present invention refers to a method according to which said first Controller (C1) monitors and steers the flow and the density of the leach product thickener underflow and the dosing of the flocculants.

### (a1) Leach product underflow flow

Monitoring of the flow of the leach product underflow is preferably conducted by controlling the minimum thickener underflow discharge flow. In case the slurry discharge flow falls below the calculated minimum to prevent solids settling out said first Controller (C1) activates a Linear Flow Intervention Controller 1 (LFIC1) that increases the wash water flow output until the minimum product thickener underflow discharge flow is above the required minimum.

More precise, the control philosophy for the leach product thickener underflow flow control uses the minimum thickener underflow discharge flow, required to ensure slurry discharge linear (line) velocity is maintained above the minimum solids settling velocity (predetermined for process-specific slurry). In the event that the slurry discharge flow falls below the calculated minimum to prevent solids settling out (< minimum linear velocity), and the pump output is at maximum, or the underflow pump is stopped or tripped, a minimum linear flow intervention controller is activated. The Linear Flow Intervention Controller activates the wash water control valve to increase wash water flow output until the minimum product thickener underflow discharge flow is above the required minimum. The intervention controller remains active for as long as the pump is not available or pump output is at maximum. This ensures that in the event of the possibility of a partial or complete choke developing on the leach product thickener underflow line, there is a flush backup system to minimize the frequency of this occurring. The underflow discharge pump will increase or decrease back down to the minimum discharge flow in response to any increase in rake torque. Rake torque is the preferred underflow flow intervention control activator, but two additional parameters could also be considered as alternative intervention controller for underflow flow control:
- Rake height level transmitter (an increase in rake height will cause a proportional increase in underflow pump output).
- Bed mass pressure transmitter (an increase in bed mass pressure will cause a proportional increase in underflow pump output).

Either of these alternatives can be used, however using the bed mass pressure transmitter as the preferred intervention controller is less preferred, due to the unreliability of bed mass pressure transmitters.

### (a2) Leach product underflow density

Monitoring of the density of the leach product underflow is preferably conducted by a densitometer and an in-line control valve. In case the product thickener underflow density is less than a process specified minimum said first Controller (C1) activates a Leach Product Thickener Flocculent Dosing Controller (LPT-FDC1) that increases the output of the Leach Product Thickener Flocculent Dosing Pump (LPT-FDP1) until the product thickener underflow density increases to affect the underflow density control valve opening and the output is above the process defined minimum.

More precise, the leach product thickener underflow density is automatically controlled around a process-defined set point, by controlled addition of wash solution into the suction line of the Leach Product Thickener Underflow Discharge Pump. The mechanism of control is by way of an in-line control valve. By controlling the underflow density by wash water dilution, fluctuations in thickener underflow density can be reduced, which in turn affords opportunity for tighter flocculent dosing master control. In order to maintain target underflow pump discharge densities and to prevent unnecessary dilution of the advance slurry to the next unit operation, the underflow density controller requires leach product thickener underflow densities exiting the thickener, prior to wash solution addition, to be slightly higher than the "dilution-addition" underflow density control set point. This is achieved by including a fall-back default status for the product thickener flocculent dosing controller. In the event that the product thickener underflow density control valve output is less than a process specified minimum (either determined by valve actuator position or by underflow wash flow meter), the Product Thickener Flocculent Dosing Controller will incrementally ramp up the output of the product thickener flocculent dosing pump, until the product thickener underflow density increases to affect the underflow density control valve (wash water addition valve) opening. Once the density control valve output is above the process-defined minimum, flocculent dosing control reverts back to the product thickener flocculent dosing master controller. The flocculent dosing intervention controller will also ensure that thickener upset conditions promoting sliming (ineffective solid bed formation), is also addressed, as, under these conditions, target underflow densities will not be achieved, resulting in the underflow density control valve (wash valve) remaining closed.

### (a3) Dosing of the leach product flocculent

Dosing of the leach product flocculent is preferably monitored by the leach solids mass flow. In case the flocculent dosing rate per unit mass of feed solids and the input concentration of made-up flocculants determining the required flow rate of flocculent per mass flow of solids fed into the leach product thickener, deviates from the process specified conditions, said Controller (C1) activates said Leach Product Thickener Flocculent Dosing Controller (LPT-FDC1) that increases or decreases the output of the Leach Product Thickener Flocculent Dosing Pump (LPT-FDP1) until the set point of the feed solids mass flow is reached again.

More precise, the leach product thickener flocculent dosing master controller uses the leach feed solids mass flow as the reference for product thickener flocculent dosing pump output. The process-specific flocculent dosing rate per unit mass of feed solids and the input concentration of made-up flocculent, determine the required flow rate of flocculent per mass flow of solids fed into the leach product thickener. In the event that the leach product thickener wash water control valve output deviates from the process specified conditions, the leach product thickener flocculent dosing controller will increase or decrease the output of the flocculent dosing pump around the feed solids mass flow feedback set point. In the case of the leach product thickener, the reference mass flow is calculated from the leach feed volumetric flow meter and leach feed densitometer. In response to any increase in rake torque that will affect an increase in underflow pump speed a decrease of flocculent addition flow rate is included in the controller for this process condition. Due to the leach product thickener receiving all leach product slurry and no counter current-washing occurring for this unit operation, no thickener overflow control is necessary.

### Counter-Current decanter control

In another embodiment of the present invention said second Controller (C2) monitors and steers the flow and the density of the counter-current decanter underflow, the dosing of the flocculants and the flow of the counter-current decanter overflow. In the following the abbreviation CCD1 is used for the counter-current decanter which is the first in a line of up to 10 separation units.

### (b1) Counter-current decanter underflow flow

Monitoring of the flow of the counter-current decanter underflow is preferably conducted by controlling the minimum counter-current decanter underflow discharge flow. In case the slurry discharge flow falls below the calculated minimum to prevent solids settling out said second Controller (C2) activates a Linear Flow Intervention Controller 1 (LFIC2) that increases the wash water flow output until the minimum counter-current decanter underflow discharge flow is above the required minimum.

More precise, the control philosophy for CCD1 underflow flow control uses the minimum CCD1 underflow discharge flow, required to ensure slurry discharge linear (line) velocity is maintained above the minimum solids settling velocity (predetermined for process-specific slurry).Minimum Linear Flow Intervention Control: In the event that the slurry discharge flow falls below the calculated minimum to prevent solids settling out (< minimum linear velocity), and the pump output is at maximum, or the CCD1 underflow pump is stopped or tripped, a minimum linear flow intervention controller is activated. The linear flow intervention controller activates the wash water control valve to increase wash water flow output until the minimum CCD1 underflow discharge flow is above the required minimum. The intervention controller remains active for as long as the pump is not available or pump output is at maximum. This ensures that in the event of a partial or complete choke developing on the CCD1 underflow line, there is a flush backup system to minimize the frequency of this occurring. This could increase plant availability considerably. The CCD1 underflow discharge pump will increase or decrease back to the minimum discharge flow in response to any increase in CCD1 rake torque. Rake torque is the preferred underflow flow intervention control activator, but two additional parameters can also be considered as alternative intervention controller for underflow flow control:
- Rake height level transmitter (an increase in rake height will cause a proportional increase in underflow pump output).
- Bed mass pressure transmitter (an increase in bed mass pressure will cause a proportional increase in underflow pump output).

Either of these alternatives can be used, however using the bed mass pressure transmitter as the preferred intervention controller is less preferred, due to the unreliability of bed mass pressure transmitters.

### (b2) Counter-current decanter underflow density

Monitoring of the density of the counter-current decanter underflow is preferably conducted by a densitometer and an in-line control valve. In case the counter-current decanter underflow density is less than a process specified minimum said second Controller (C2) activates a Counter-Current Decanter Flocculent Dosing Controller (CCD-FDC2) that increases the output of the Counter-Current Decanter Flocculent Dosing Pump (CCD-FDP2) until the counter-current decanter underflow density increases to affect the underflow density control valve opening and the output is above the process defined minimum.

For the example illustrated in **Figure 2**, the CCD1 underflow density is automatically controlled around a process-defined set point, by controlled addition of a bleed stream of CCD2 - the second decanter in line - overflow solution (which forms the wash solution in this case), into the suction line of the CCD1 underflow discharge pump. The mechanism of control is by way of an in-line control valve. By controlling the underflow density by wash water dilution, fluctuations in thickener underflow density can be reduced, which in turn affords opportunity for tighter flocculent dosing master control. In order to maintain target underflow pump discharge densities and to prevent unnecessary dilution of the advance slurry to the next unit operation, the underflow density controller requires CCD1 underflow densities exiting the CCD, prior to wash solution addition, to be slightly higher than the "dilution addition" underflow density control set point. This is achieved by including a fall-back default status for the CCD1 flocculent dosing controller. In the event that the CCD1 underflow density control valve output is less than a process-specified minimum (either determined by valve actuator position or by underflow wash flow meter), the CCD1 flocculent dosing controller will incrementally ramp up the output of the CCD1 flocculent dosing pump, until the CCD1 underflow density increases to affect the underflow density control valve (wash water addition valve) opening. Once the density control valve output is above the process defined minimum, flocculent dosing control reverts back to the CCD1 flocculent dosing master controller. The flocculent dosing intervention controller will also ensure that counter-current decanter upset conditions promoting sliming (ineffective solid bed formation), is also addressed, as, under these conditions, target underflow densities will not be achieved, resulting in the underflow density control valve (wash valve) remaining closed.

### (b3) Dosing of the leach product flocculent

Dosing of the leach product flocculent is preferably monitored by the leach thickener underflow solids mass flow. In case the flocculent dosing rate per unit mass of feed solids and the input concentration of made-up flocculents determining the required flow rate of flocculent per mass flow of solids fed into the counter-current decanter, deviates from the process specified conditions, said second Controller (C2) activates said Counter-Current Decanter Flocculent Dosing Controller (CCD-FDC1) that increases or decreases the output of the Counter-Current Decanter Flocculent Dosing Pump (CCD-FDP1) until the set point of the leach product thickener underflow solids mass flow is reached again.

More precise, the CCD1 flocculent dosing master controller uses the leach thickener underflow solids mass flow as the reference for CCD1 flocculent dosing pump output. The process-specific flocculent dosing rate per unit mass of feed solids and the input concentration of made-up flocculent determine the required flow rate of flocculent per mass flow of solids into CCD1. In the event that the CCD1 wash water control valve output is above the process-specified minimum (ref 3.1.2), the CCD1 flocculent dosing controller will increase or decrease the output of the flocculent dosing pump around the leach product thickener underflow solids mass flow feedback. In response to any increase in rake torque, that will affect an increase in underflow pump speed a decrease of flocculent addition flow rate is included in the controller for this process condition.

### (b4) Counter-current decanter overflow flow

Monitoring of the counter-current decanter overflow flow is preferably conducted by a flow meter. In case the level of aqueous overflow in the counter-current decanter tank moves outside process-defined battery conditions, the output of the tank discharge pump (TDP) is adjusted accordingly.

### Split-Circuit Technology

In another preferred embodiment the present invention is incorporated into a leaching process for the recovery of valuable metals, in particular but not limited to copper, nickel, manganese, iron and gold, using the so-called split-circuit technology that is subject to US patent US 7,799,294 (Cognis) which is incorporated by reference. The process encompasses
(a) providing a first aqueous leach pulp which comprises a mixture of leached solids and an aqueous leach solution comprising a metal, a leaching agent and water;
(b) subjecting the first aqueous leach pulp to a first solid-liquid separation to provide a first clarified aqueous leach solution and a second aqueous leach pulp, wherein the second aqueous leach pulp comprises the leached solids at a percent solids level greater than the first pulp;
(c) subjecting the first clarified aqueous leach solution to a first solvent extraction prior to any significant dilution, whereby a first aqueous raffinate is obtained;
(d) subjecting the second aqueous leach pulp to a second solid-liquid separation with dilution via an aqueous stream to obtain a second clarified aqueous leach solution; and
(e) subjecting the second clarified aqueous leach solution to a second solvent extraction whereby a second aqueous raffinate is obtained.

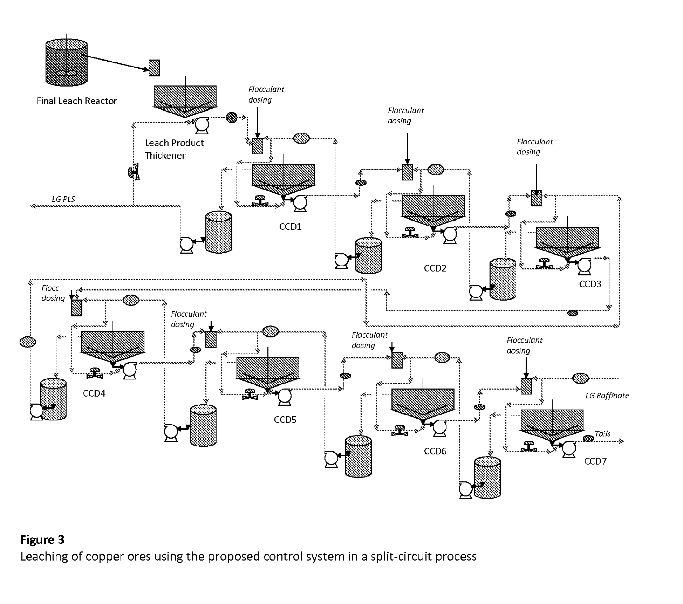

**Figure 3** shows a flow sheet for the recovery of copper by leach product slurry solids/liquid separation. In this case the overflow reports to a high grade (HG) copper solvent extraction circuit, while the underflow is washed counter-current through a number of solids/liquid separation decantation stages, using raffinate from the low grade copper solvent extraction circuit. The number of washing stages may vary from one process circuit to the next, however the control philosophy described for each unit operation is the same for any number of washing stages.

The figure is also useful illustrating the overflow control (step b4): The CCD1 overflow flow is controlled around the low grade (LG) raffinate flow input at CCD 7. The output of the CCD 1 needle tank discharge pump is increased or decreased around the moving average flow from the CCD7 LG raffinate flow meter (wash water flow meter). The moving average ensures smoother controller step changes around the flow controller output. The piping configuration for any CCD needle tank pump discharge is such that total discharge flow is measured prior to the off-take line for the underflow bleed wash line. The CCD1 overflow includes an intervention controller linked to the CCD1 level transmitter. In the event that the level of aqueous overflow in the CCD1 needle tank moves outside process-defined battery limit high and low levels, the CCD1 needle tank discharge pump output is increased or decreased accordingly. Once the CCD1 needle tank level returns to within the process-defined battery limits, control reverts back to the primary CCD1 overflow flow control.

Similar control philosophies are prescribed for all additional downstream CCDs with the exception of the final CCD (in this example, CCD 7). The LG raffinate feed flow is rationed according to the total mass flow of leach product underflow solids feeding into CCD1.

## Claims

1. In a method for dewatering a slurry from the leaching of a valuable ore with an aqueous solution of an effective leaching agent via a solids/liquid decantation system, providing an overflow depleted from solids and an underflow rich in solids that is washed counter-current through a number of solids/liquid decantation stages, the improvement implementing
(a) a first Controller (C1) for monitoring and steering the leach product thickener; and
(b) a second Controller (C2) for monitoring and steering the counter-current decanter.

2. Method according to Claim 1, **characterised in that** said first Controller (C1) monitors and steers the flow and the density of the leach product thickener underflow and the dosing of the flocculants.

3. Method according to Claim 2, **characterised in that** said first Controller (C1) monitors the flow of the leach product thickener underflow by controlling the minimum thickener underflow discharge flow.

4. Methods according to Claims 2 and/or 3, **characterised in that** in case the slurry discharge flow falls below the calculated minimum to prevent solids settling out said first Controller (C1) activates a Linear Flow Intervention Controller 1 (LFIC1) that increases the wash water flow output until the minimum product thickener underflow discharge flow is above the required minimum.

5. Method according to Claim 2, **characterised in that** said first Controller (C1) monitors the density of the leach product thickener underflow by a densitometer and an in-line control valve.

6. Method according to Claims 2 and 5, **characterised in that** in case the product thickener underflow density is less than a process specified minimum said first Controller (C1) activates a Leach Product Thickener Flocculent Dosing Controller (LPT-FDC1) that increases the output of the Leach Product Thickener Flocculent Dosing Pump (LPT-FDP1) until the product thickener underflow density increases to affect the underflow density control valve opening and the output is above the process defined minimum.

7. Method according to Claim 2, **characterised in that** said first Controller (C1) monitors the dosing of the leach product flocculent by the leach solids mass flow.

8. Method according to Claims 2 and 7, **characterised in that** in case the flocculent dosing rate per unit mass of feed solids and the input concentration of made-up flocculents determining the required flow rate of flocculent per mass flow of solids fed into the leach product thickener, deviates from the process specified conditions, said first Controller (C1) activates said Leach Product Thickener Flocculent Dosing Controller (LPT-FDC1) that increases or decreases the output of the Leach Product Thickener Flocculent Dosing Pump (LPT-FDP1) until the set point of the feed solids mass flow is reached again.

9. Method according to Claim 1, **characterised in that** said second Controller (C2) monitors and steers the flow and the density of the counter-current decanter underflow, the dosing of the flocculants and the flow of the counter-current decanter overflow.

10. Method according to Claim 9, **characterised in that** second Controller (C2) monitors the flow of the counter-current decanter underflow by controlling the minimum counter-current decanter underflow discharge flow.

11. Method according to Claims 9 and 10, **characterised in that** in case the slurry discharge flow falls below the calculated minimum to prevent solids settling out said second Controller (C2) activates a Linear Flow Intervention Controller 1 (LFIC2) that increases the wash water flow output until the minimum counter-current decanter underflow discharge flow is above the required minimum.

12. Method according to Claim 9, **characterised in that** said second Controller (C2) monitors the density of the leach product thickener underflow by a densitometer and an in-line control valve.

13. Method according to Claims 9 and 12, **characterised in that** in case the counter-current decanter underflow density is less than a process specified minimum said second Controller (C2) activates a Counter-Current Decanter Flocculent Dosing Controller (CCD-FDC2) that increases the output of the Counter-Current Decanter Flocculent Dosing Pump (CCD-FDP2) until the counter-current decanter underflow density increases to affect the underflow density control valve opening and the output is above the process defined minimum.

14. Method according to Claim 9, **characterised in that** said second Controller (C2) monitors the dosing of counter-current decanter flocculent by the leach thickener underflow solids mass flow.

15. Method according to Claims 9 and 14, **characterised in that** in case the flocculent dosing rate per unit mass of feed solids and the input concentration of made-up flocculents determining the required flow rate of flocculent per mass flow of solids fed into the counter-current decanter, deviates from the process specified conditions, said second Controller (C2) activates said Counter-Current Decanter Flocculent Dosing Controller (CCD-FDC1) that increases or decreases the output of the Counter-Current Decanter Flocculent Dosing Pump (CCD-FDP1) until the set point of the leach product thickener underflow solids mass flow is reached again.

16. Method according to Claim 9, **characterised in that** said second Controller (C2) monitors the flow of the counter-current decanter overflow is monitored by a flow meter.

17. Method according to Claims 9 and 16, **characterised in that** in case the level of aqueous overflow in the counter-current decanter tank moves outside process-defined battery conditions, the output of the tank discharge pump (TDP) is adjusted accordingly.

18. Method according to any of the preceding Claims 1 to 17, **characterised in that** the control system is part of a leaching process for the recovery of valuable metals from ores using the so-called split-circuit technology.
